# EUROPEAN PATENT SPECIFICATION

(11) **EP 4 191 378 B1**
(45) Date of publication and mention of the grant of the patent: **26.08.2026**
(21) Application number: 22210865.6
(22) Date of filing: 01.12.2022
(51) Int. Cl.: G06F 1/185

(54) **ELECTRONIC DEVICE, EXPANSION STRUCTURE FOR ELECTRONIC CARD AND ASSEMBLY METHOD THEREOF**
ELEKTRONISCHE VORRICHTUNG, ERWEITERUNGSSTRUKTUR FÜR ELEKTRONISCHE KARTE UND MONTAGEVERFAHREN DAFÜR
DISPOSITIF ÉLECTRONIQUE, STRUCTURE D'EXTENSION POUR CARTE ÉLECTRONIQUE ET PROCÉDÉ D'ASSEMBLAGE ASSOCIÉ

(30) Priority: 03.12.2021 CN 202111474967
(43) Date of publication of application: 07.06.2023
(73) Proprietor: Getac Technology Corporation, New Taipei City (TW)
(72) Inventor: CHANG, Kuang-Yeh, 11568 Taipei City (TW); CHIU, Yi-Chia, 11568 Taipei City (TW)
(74) Representative: Viering, Jentschura & Partner mbB Patent- und Rechtsanwälte

(56) References cited:
- EP-A1- 3 612 010
- CN-A- 110 275 578
- CN-A- 111 221 395
- CN-U- 206 892 773
- US-B1- 10 152 097

## Description

### BACKGROUND OF THE INVENTION

### FIELD OF THE INVENTION

The present invention relates to an electronic device for installing an electronic card, and an assembly method for assembling an expansion structure for an electronic device.

### DESCRIPTION OF THE PRIOR ART

Accompanied with the highly developed wireless communications, the 4G mobile communication technology allow electronic devices such as smart phones, tablet computers or laptop computers to be equipped with 4G electronic cards (for example, SIM cards) to thereby run online games or view streaming videos. With the closely subsequent launch of the 5G mobile communication technology, mobile communication network, wireless network and wired network technologies are combined, such that innovations of large networks are further stimulated while transmission speeds are significantly increased, providing a vast application field.

Because the 5G mobile communication technology is still within a promoting stage, there are many areas in which 5G base stations are yet unsupported, and users may need to manually replace 4G electronic cards or 5G electronic cards. However, 4G electronic cards and 5G electronic cards, being different in size, cannot share the same installation interface. Thus, when a 4G electronic card or a 5G electronic card needs to be replaced, a user usually needs to replace the installation interface of the circuit board, causing removal complications or even damage in parts.

Therefore, on the basis of extensive development with the practice of theories, it is an object of the present invention to provide a solution for effectively improving the issues above in aim of improving and resolving the above issues.

Each of CN 110275578 A, CN 111221395 A, CN 206 892 773 U and EP 3 612 010 A1 discloses a structure for mounting electronic cards with different sizes to a circuit board. US 10152097 B1 discloses a heat-dissipating device for expansion card.

### SUMMARY OF THE INVENTION

The present invention relates to an electronic device according to independent claim 1 and an assembly method according to independent claim 3 are provided. Preferred embodiments are further defined in the dependent claims.

It is a primary object of the present invention to install a small-size electronic card on an installation interface of a large-size electronic cards through an expansion structure, thereby allowing sharing a circuit board with the same installation interface.

To achieve the object above, an expansion structure for an electronic card is provided for installing an electronic card. The expansion structure includes a carrier board, at least on limiting member and a fixing element. The carrier board carries the electronic card. The limiting member includes a sidewall and a blocking piece extended from the sidewall. The sidewall is formed on one side of the carrier board, and the sidewall, the blocking piece and the carrier board jointly define a sliding channel for accommodating the electronic card. The fixing element fixes the electronic card at the carrier board.

To achieve the object above, an electronic device for installing an electronic card is provided, wherein the electronic card has an insertion end. The electronic device includes a circuit board and an expansion structure. The circuit board is provided with a connector slot. The expansion structure includes a carrier board and a fixing element. The electronic card is fastened at the carrier board and is fixed by the fixing element. A sidewall is formed on one side of the carrier board, and a blocking piece extends inward from the sidewall such that the blocking piece and the sidewall jointly cover the side of the electronic card. The expansion structure is disposed at the circuit board, and is for connecting the insertion end and the connector slot with each other.

To achieve the object above, an assembly method is provided for assembling an external electronic component to an electronic device. The assembly method includes: providing an electronic device, a carrier board, a fixing element and an electronic card, wherein the electronic device is provided with a circuit board, the circuit board is provided with a connector slot, a sidewall is formed on a side of the carrier board, a blocking piece is extended form the sidewall, the carrier board, the sidewall and the blocking piece jointly define a sliding channel, and the electronic card has an insertion end; inserting one end of the electronic card away from the insertion end into the sliding channel to install the electronic card at the carrier board; fixing the electronic card on the carrier board by the fixing element to form an expansion structure; and connecting the insertion end and the connector slot with each other, and fixing the expansion structure on the circuit board.

The present invention at least provides the following effects. By carrying at least one-third of the area of a bottom surface of the electronic card by the carrier board, the electronic card can be effectively supported by the carrier board. By respectively covering the left and right sides of the electronic card by the limiting members, horizontal movement and axial movement of the electronic card can be restricted. The fixing element is capable of fixing the electronic card on the carrier board. When the electronic card is inserted into the limiting member on the carrier board, stopping and positioning effects are achieved by a block element. The expansion structure is fixed on the circuit board by a tightening component and a connecting column.

### BRIEF DESCRIPTION OF THE DRAWINGS

FIG. 1 is a three-dimensional appearance diagram of an expansion structure and an electronic card of the present invention;
FIG. 2 is an exploded three-dimensional diagram of an expansion structure and an electronic card of the present invention;
FIG. 3 is a section diagram of an expansion structure and an electronic card according to another embodiment of the present invention;
FIG. 4 is an exploded three-dimensional diagram of an electronic card and a circuit board;
FIG. 5 is an exploded three-dimensional diagram of an expansion structure and a circuit board of the present invention; and
FIG. 6 is a three-dimensional appearance diagram of an expansion structure and a circuit board of the present invention.

### DETAILED DESCRIPTION OF THE EMBODIMENTS

Details and technical contents of the present invention are given with the accompanying drawings below. It should be noted that the accompanying drawings are for illustration purposes and are not to be construed as limitations to the present invention.

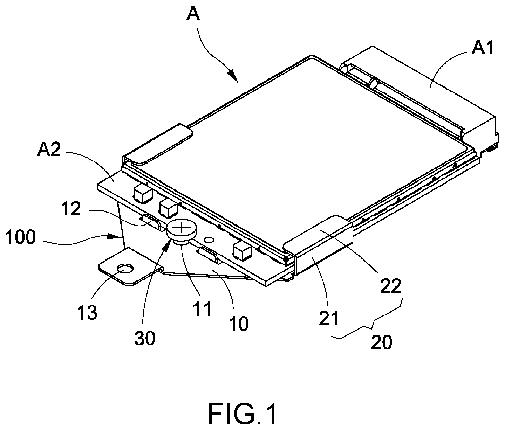

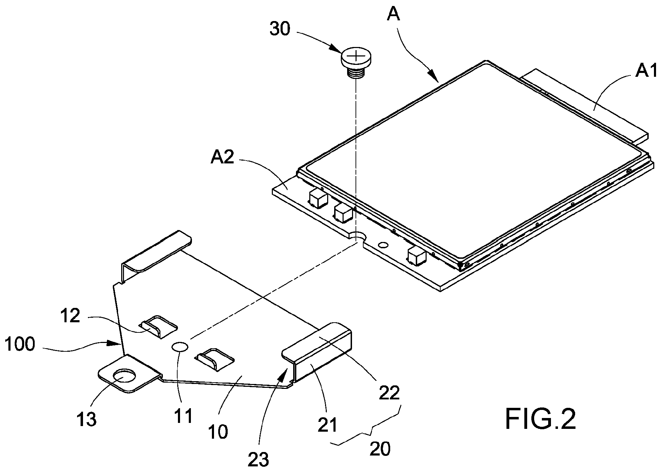

The present invention provides an expansions structure for an electronic card for installing an electronic card A. Referring to FIG. 1 and FIG. 2, the expansion structure primarily includes a carrier board 10, at least one limiting member 20 and a fixing element 30.

In this embodiment, the electronic card A is a 4G mobile communication chip (for example, a SIM card); however, the present invention is not limited to the example above. For example, the electronic card A may also be a 3G, LTE or 5G mobile communication chip.

The carrier board 10 carries a part of a bottom surface of the electronic card A. Preferably, the carrier board 10 carries at least one-third of the area of the bottom surface of the electronic card A, such that the electronic card A is effectively carried by the carrier board 10. In this embodiment, the carrier board 10 is substantially a plate-like stainless steel metal element; however, the present invention is not limited to the example above. For example, the carrier board 10 may also be other metal plates or plastic plates having certain strength.

The limiting member 20 includes a sidewall 21 and a blocking piece 22 vertically extended from the sidewall 21. The sidewall 21 s formed on one side of the carrier board 10, and the sidewall 21, blocking piece 22 and the carrier board 10 jointly define a sliding channel 23 for accommodating the electronic card A. In this embodiment, the number of the limiting member 20 is two, and the two limiting members 20 are respectively disposed on two sides of the carrier board 10. Thus, the sliding channels 23 formed at the limiting members 20 can respectively cover left and right sides of the electronic card A, thereby limiting horizontal movement and axial movement of the electronic card A such that the electronic card A is allowed to slide only in the vertical direction.

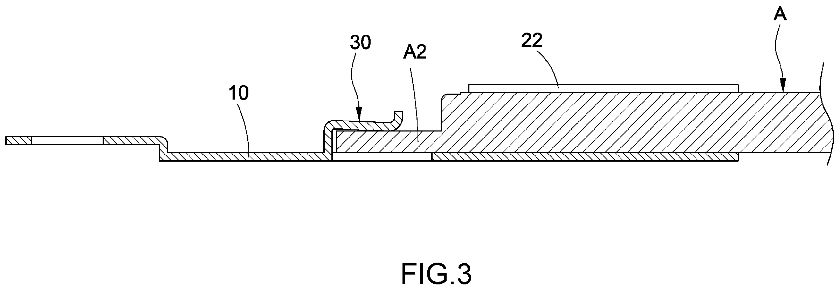

The fixing element 30 fixes the electronic card A on the carrier board 10. In this embodiment, the fixing element 30 is a screw bolt, the carrier board 10 is provided with a lock hole 11, and the screw bolt passes through the electronic card A and is locked at the lock hole 11, thereby clamping and securing the electronic card A on the carrier board 10; however, the present invention is not limited to the examples above. Referring to FIG. 3 showing an expansion structure according to another embodiment of the present invention, the fixing element 30 may also be an elastic piece disposed on the carrier board 10, wherein the elastic piece is a metal piece capable of clamping the electronic card A on the carrier board 10 by its elasticity. Preferably, a front end of the elastic piece may be an arc to facilitate the electronic card A to be smoothly inserted along the arc and be clamped by pushing the elastic piece upward.

**In** addition, the carrier board 10 is provided with at least one stopping element 12 in a protruding manner, wherein the stopping element 12 stops at one end of each sliding channel 23 into which the electronic card A is inserted. More specifically, the stopping element 12 vertically stops the electronic card A, so that the electronic card A is allowed to be pushed to an expected location and be fixed by the fixing element 30. In this embodiment, the stopping element 12 is a metal piece formed by stamping and bending the carrier board 10, the number of the stopping element 12 is two, and the two stopping elements 12 are respectively located on left and right sides of the locking hole 11; however, the present invention is not limited to the examples above. For example, the stopping element 12 may also be a welded metal piece or metal block, and the number of the stopping element 12 may be one, given that the electronic card A is provided with a stopping effect.

The present invention further provides an electronic device primarily including a housing (not shown), a circuit board 50, an electronic card A, the expansion structure 100 described above, and a tightening component 60.

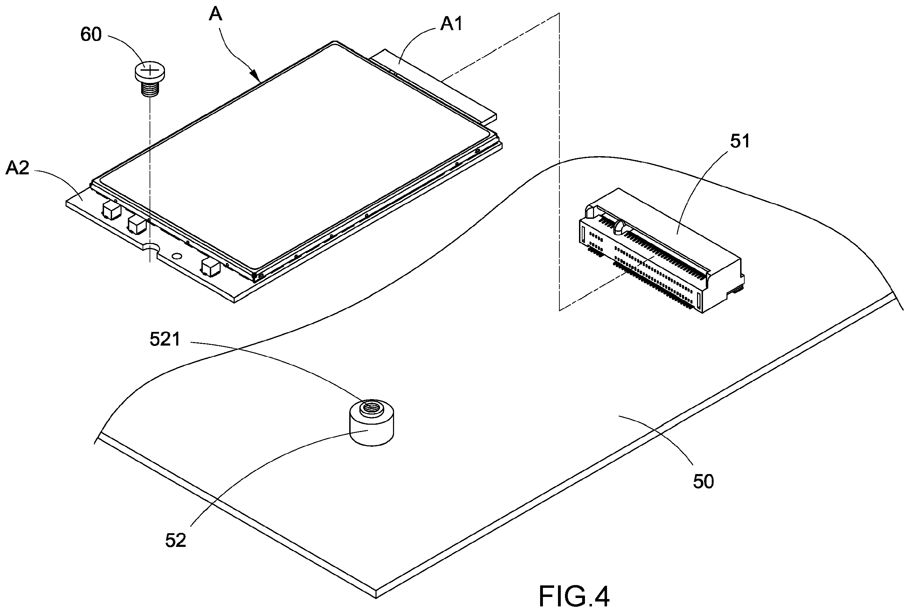

Referring to FIG. 4, the circuit board 50 is disposed in the housing (not shown), a connector slot 51 and a connecting column 52 are disposed on the circuit board 50, and the electronic card A in FIG. 4 is a 5G mobile communication chip having an insertion end A1 and a fixing end A2 on two ends thereof, respectively. The insertion end A1 of the electronic card A is correspondingly plugged with the connector slot 51, and the fixing end A2 of the electronic card A is fixed at the connecting column 52 by the tightening component 60. In this embodiment, the tightening component 60 is a screw bolt, the connecting column 52 is a screw stud having a screw hole 521, the fixing end A2 has a fixing hole, and the screw bolt passes through the fixing hole of the 5G electronic card A and is locked at the screw hole 521 of the screw stud; however, the present invention is not limited to the examples above.

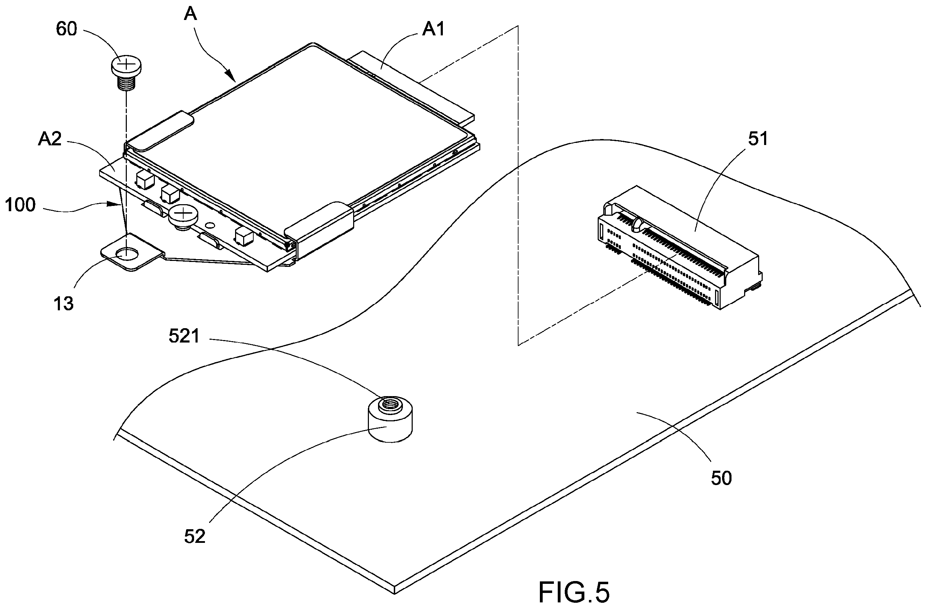

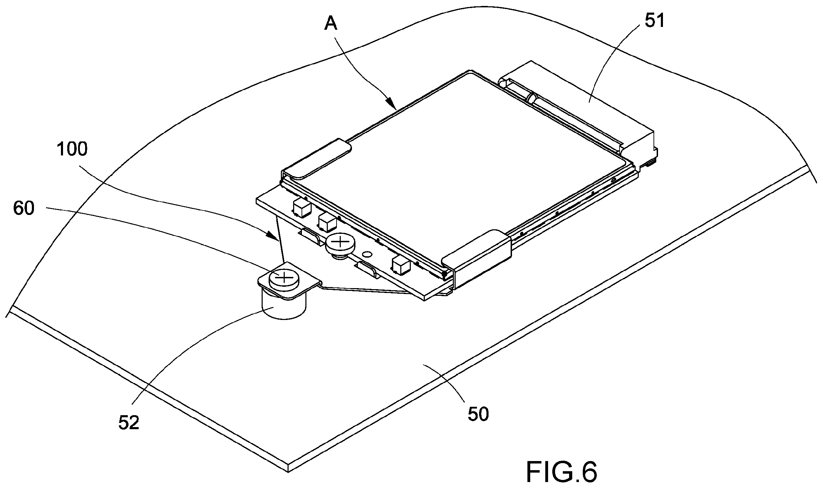

Referring to FIG. 5 and FIG. 6, the circuit board 50 is provided with the connector slot 51 and the connecting column 52 described above, and the electronic card A in FIG. 5 and FIG. 6 is a 4G mobile communication chip being smaller in size than a 5G mobile communication chip; however, the present invention is not limited to the examples above. For example, the electronic card A of this embodiment may also be a 3G or LTE mobile communication chip, given that the lengthwise dimension is less than that of the 5G mobile communication chip. The electronic card A is installed on the expansions structure 100 and has an insertion end A1, wherein the insertion end A1 is located on one end of the electronic card A away from the fixing element 30. The expansion structure 100 is disposed on the circuit board 50, so as to achieve an electrical connection between the insertion end A1 and the connector slot 51 connected to each other for signal transmission.

In addition, the carrier board 10 is provided with a through hole 13, and the tightening component 60 passes through the through hole 13 and is tightened with the connecting column 52, thereby fixing the expansion structure 100 on the circuit board 50. In this embodiment, the tightening component 60 is a screw bolt, the connecting column 52 is a screw stud having a screw hole 521, the screw bolt passes through the through hole 13 of the carrier board 10 and is locked at the screw hole 521 of the screw stud; however, the present invention is not limited to the examples above. For example, the tightening component 60 may also be a cap positioning pin, the connecting column 52 may be a column having a positioning hole, and the cap positioning pin and the positioning hole are tightly packed so as to clamp and secure the carrier board 10 of the expansion structure 100 on the connecting column 52 by the cap positioning pin.

Thus, the small-size 4G mobile communication chip can be installed on the expansion structure 100 for length expansion, and the small-size 4G mobile communication chip can then be installed on the installation interface of the large-size 5G mobile communication chip, thereby allowing the differently-sized electronic card A to share the installation interface of the same circuit board 50. Moreover, while a user uses an electronic device, the user is allowed to conveniently and quickly replace the desired electronic card A without needing to also replace the entire circuit board 50.

**It** should be noted that, the assembly method for the electronic device and the expansion structure 100 of the present invention includes the following steps. First of all, one end of the electronic card A away from the insertion end A1 is inserted into the two sliding channels 23 on the left and right sides of the carrier board 10, and the electronic card A is pushed vertically until being stopped and positioned by the stopping elements 12. Then, the electronic card A is fixed on the carrier board 10 by the fixing element 30 to thereby form the expansion structure 100. The insertion end A1 and the connector slot 51 are connected to each other, and the tightening component 60 passes through the through hole 13 and is fixed with the connecting column 52, thereby fixing the expansion structure 100 on the circuit board 50 to complete the assembly.

## Claims

1. An electronic device, for installing an electronic card (A), the electronic card (A) having an insertion end (A1), the electronic device comprising:
a circuit board (50), provided with a connector slot (51); and
an expansion structure (100), comprising a carrier board (10) and a fixing element (30);
wherein, the electronic card (A) is disposed at the carrier board (10) and is fixed by the fixing element (30), a sidewall (21) is formed on a side of the carrier board (10), a blocking piece (22) is extended inward from the sidewall (21), the blocking piece (22) and the sidewall (21) jointly cover the side of the electronic card (A), and the expansion structure (100) is disposed at the circuit board (50) and connects the insertion end (A1) of the electronic card (A) and the connector slot (51) with each other,
wherein the fixing element (30) is a screw bolt, the carrier board (10) is provided with a locking hole (11), and the screw bolt passes through the electronic card (A) and is locked at the locking hole (11),
**characterised in that**
the carrier board (10) is provided with a stopping element (12) in a protruding manner, and the stopping element (12) stops at one end of the electronic card (A) away from the insertion end (A1),
and **in that** the number of the stopping element (12) is two, and the two stopping elements (12) are respectively located on left and right sides of the locking hole (11).

2. The electronic device according to claim 1 further comprising:
a tightening component (60);
wherein the circuit board (20) is provided with a connecting column (52) in a protruding manner, the carrier board (10) is provided with a through hole (13), and the tightening component (60) passes through the through hole (13) and is tightened with the connecting column (52).

3. An assembly method for assembling an expansion structure for an electronic device, comprising:
providing an electronic device, a carrier board (10), a fixing element (30) and an electronic card (A); wherein the electronic device is provided with a circuit board (50), the circuit board (50) is provided with a connector slot (51), a sidewall (21) is formed on a side of the carrier board (10), a blocking piece (22) is extended from the sidewall (21), the carrier board (10), the sidewall (21) and the blocking piece (22) jointly define a sliding channel (23), and the electronic card (A) has an insertion end (A1);
inserting one end of the electronic card (A) away from the insertion end (A1) into the sliding channel (23) to install the electronic card (A) at the carrier board (10);
fixing the electronic card (A) on the carrier board (10) by the fixing element (30) to form an expansion structure (100); and
connecting the insertion end (A1) and the connector slot (51) with each other to fix the expansion structure (100) on the circuit board (50),
wherein the fixing element is a screw bolt (30), the carrier board (10) is provided with a locking hole (11), and the screw bolt passes through the electronic card (A) and is locked at the locking hole (11),
wherein the carrier board (10) is provided with a stopping element (12) in a protruding manner, when the one end of the electronic card (A) away from the insertion end (A1) is inserted into the sliding channel (23), the electronic card (A) is pushed until being stopped and positioned by the stopping element (12), the number of the stopping element (12) is two, and the two stopping elements (12) are respectively located on left and right sides of the locking hole (11).

4. The assembly method according to claim 3, further comprising:
providing a tightening component (60);
wherein the circuit board (50) is provided with a connecting column (52), the carrier board (10) is provided with a through hole (13), and after the insertion end (A1) and the connector slot (51) are connected with each other, the tightening component (60) passes through the through hole (13) and is fixed with the connecting column (52).

## Patentansprüche

1. Elektronische Vorrichtung zum Installieren einer elektronischen Karte (A), wobei die elektronische Karte (A) ein Einsteckende (A1) aufweist, wobei die elektronische Vorrichtung umfasst:
eine Leiterplatte (50), die mit einem Steckverbinder (51) versehen ist; und
eine Erweiterungsstruktur (100), die eine Trägerplatte (10) und ein Befestigungselement (30) umfasst;
wobei die elektronische Karte (A) an der Trägerplatte (10) angeordnet ist und durch das Befestigungselement (30) befestigt ist, eine Seitenwand (21) auf einer Seite der Trägerplatte (10) ausgebildet ist, sich ein Blockierstück (22) von der Seitenwand (21) nach innen erstreckt, das Blockierstück (22) und die Seitenwand (21) gemeinsam die Seite der elektronischen Karte (A) abdecken und die Erweiterungsstruktur (100) an der Leiterplatte (50) angeordnet ist und das Einsteckende (A1) der elektronischen Karte (A) und den Steckverbinder (51) miteinander verbindet,
wobei das Befestigungselement (30) ein Schraubbolzen ist, die Trägerplatte (10) mit einem Verriegelungsloch (11) versehen ist und der Schraubbolzen durch die elektronische Karte (A) verläuft und an dem Verriegelungsloch (11) verriegelt ist, **dadurch gekennzeichnet, dass** die Trägerplatte (10) mit einem Stoppelement (12) in einer vorstehenden Weise versehen ist und das Stoppelement (12) an einem Ende der elektronischen Karte (A) weg von dem Einsteckende (A1) stoppt,
und dadurch, dass die Anzahl des Stoppelements (12) zwei beträgt und die zwei Stoppelemente (12) jeweils auf der linken und rechten Seite des Verriegelungslochs (11) angeordnet sind.

2. Elektronische Vorrichtung nach Anspruch 1, ferner umfassend:
eine Festspannkomponente (60);
wobei die Leiterplatte (20) mit einer Verbindungssäule (52) in einer vorstehenden Weise versehen ist, die Trägerplatte (10) mit einem Durchgangsloch (13) versehen ist und die Festspannkomponente (60) durch das Durchgangsloch (13) verläuft und mit der Verbindungssäule (52) festgespannt ist.

3. Montageverfahren zum Montieren einer Erweiterungsstruktur für eine elektronische Vorrichtung, umfassend:
Bereitstellen einer elektronischen Vorrichtung, einer Trägerplatte (10), eines Befestigungselements (30) und einer elektronischen Karte (A); wobei die elektronische Vorrichtung mit einer Leiterplatte (50) versehen ist, die Leiterplatte (50) mit einem Steckverbinder (51) versehen ist, eine Seitenwand (21) auf einer Seite der Trägerplatte (10) ausgebildet ist, sich ein Blockierstück (22) von der Seitenwand (21) erstreckt, die Trägerplatte (10), die Seitenwand (21) und das Blockierstück (22) gemeinsam einen Gleitkanal (23) definieren und die elektronische Karte (A) ein Einsteckende (A1) aufweist;
Einstecken eines Endes der elektronischen Karte (A) weg von dem Einsteckende (A1) in den Gleitkanal (23), um die elektronische Karte (A) an der Trägerplatte (10) zu installieren;
Befestigen der elektronischen Karte (A) an der Trägerplatte (10) durch das Befestigungselement (30), um eine Erweiterungsstruktur (100) zu bilden; und
Verbinden des Einsteckendes (A1) und des Steckverbinders (51) miteinander, um die Erweiterungsstruktur (100) an der Leiterplatte (50) zu befestigen,
wobei das Befestigungselement ein Schraubbolzen (30) ist, die Trägerplatte (10) mit einem Verriegelungsloch (11) versehen ist und der Schraubbolzen durch die elektronische Karte (A) verläuft und an dem Verriegelungsloch (11) verriegelt ist, wobei die Trägerplatte (10) mit einem Stoppelement (12) in einer vorstehenden Weise versehen ist, dass wenn das eine Ende der elektronischen Karte (A) weg von dem Einsteckende (A1) in den Gleitkanal (23) eingesteckt wird, die elektronische Karte (A) geschoben wird, bis sie durch das Stoppelement (12) gestoppt und positioniert wird,
die Anzahl des Stoppelements (12) zwei beträgt und die zwei Stoppelemente (12) jeweils auf der linken und rechten Seite des Verriegelungslochs (11) angeordnet sind.

4. Montageverfahren nach Anspruch 3, ferner umfassend:
Bereitstellen einer Festspannkomponente (60);
wobei die Leiterplatte (50) mit einer Verbindungssäule (52) versehen ist, die Trägerplatte (10) mit einem Durchgangsloch (13) versehen ist und, nachdem das Einsteckende (A1) und der Steckverbinder (51) miteinander verbunden sind, die Festspannkomponente (60) durch das Durchgangsloch (13) verläuft und mit der Verbindungssäule (52) befestigt wird.

## Revendications

1. Dispositif électronique destiné à l'installation d'une carte électronique (A), la carte électronique (A) comportant une extrémité d'insertion (A1), le dispositif électronique comprenant :
une carte de circuit (50), pourvue d'une fente de connecteur (51) ; et
une structure d'extension (100), comprenant une carte support (10) et un élément de fixation (30) ;
dans lequel la carte électronique (A) est disposée sur la carte support (10) et est fixée par l'élément de fixation (30), une paroi latérale (21) est formée sur un côté de la carte support (10), une pièce de blocage (22) s'étend vers l'intérieur à partir de la paroi latérale (21), la pièce de blocage (22) et la paroi latérale (21) recouvrent conjointement le côté de la carte électronique (A), et la structure d'extension (100) est disposée sur la carte de circuit (50) et relie entre elles l'extrémité d'insertion (A1) de la carte électronique (A) et la fente de connecteur (51),
dans lequel l'élément de fixation (30) est un boulon fileté, la carte support (10) est pourvue d'un trou de verrouillage (11), et le boulon fileté passe à travers la carte électronique (A) et est verrouillé au niveau du trou de verrouillage (11),
**caractérisé en ce que**
la carte support (10) est pourvue d'un élément d'arrêt (12) de manière à être en saillie, et l'élément d'arrêt (12) vient buter contre une extrémité de la carte électronique (A) éloignée de l'extrémité d'insertion (A1),
et **en ce que**
le nombre d'éléments d'arrêt (12) est de deux, et les deux éléments d'arrêt (12) sont respectivement situés sur les côtés gauche et droit du trou de verrouillage (11).

2. Dispositif électronique selon la revendication 1, comprenant en outre :
un composant de serrage (60) ;
dans lequel la carte de circuit (20) est pourvue d'une colonne de connexion (52) de manière à être en saillie, la carte support (10) est pourvue d'un trou traversant (13), et le composant de serrage (60) passe à travers le trou traversant (13) et est serré avec la colonne de connexion (52).

3. Procédé d'assemblage pour assembler une structure d'extension pour un dispositif électronique, comprenant :
la fourniture d'un dispositif électronique, d'une carte support (10), d'un élément de fixation (30) et d'une carte électronique (A) ; le dispositif électronique étant muni d'une carte de circuit (50), la carte de circuit (50) étant munie d'une fente de connecteur (51), une paroi latérale (21) étant formée sur un côté de la carte support (10), une pièce de blocage (22) s'étendant à partir de la paroi latérale (21), la carte support (10), la paroi latérale (21) et la pièce de blocage (22) définissant conjointement un canal coulissant (23), et la carte électronique (A) comportant une extrémité d'insertion (A1) ;
l'insertion d'une extrémité de la carte électronique (A), éloignée de l'extrémité d'insertion (A1), dans le canal coulissant (23) afin d'installer la carte électronique (A) sur la carte support (10) ;
la fixation de la carte électronique (A) sur la carte support (10) par l'élément de fixation (30) afin de former une structure d'extension (100) ; et
la connexion de l'extrémité d'insertion (A1) et de la fente de connecteur (51) l'une à l'autre pour fixer la structure d'extension (100) sur la carte de circuit (50),
dans lequel l'élément de fixation est un boulon fileté (30), la carte support (10) est pourvue d'un trou de verrouillage (11), et le boulon fileté passe à travers la carte électronique (A) et est verrouillé au niveau du trou de verrouillage (11),
dans lequel la carte support (10) est pourvue d'un élément d'arrêt (12) de manière à être en saillie, lorsque ladite une extrémité de la carte électronique (A), éloignée de l'extrémité d'insertion (A1), est insérée dans le canal coulissant (23), la carte électronique (A) est poussée jusqu'à ce qu'elle soit arrêtée et positionnée par l'élément d'arrêt (12), le nombre d'éléments d'arrêt (12) est de deux, et les deux éléments d'arrêt (12) sont respectivement situés sur les côtés gauche et droit du trou de verrouillage (11).

4. Procédé d'assemblage selon la revendication 3, comprenant en outre :
la fourniture d'un composant de serrage (60) ;
dans lequel la carte de circuit (50) est pourvue d'une colonne de connexion (52), la carte support (10) est pourvue d'un trou traversant (13), et une fois que l'extrémité d'insertion (A1) et la fente de connecteur (51) sont reliées l'une à l'autre, le composant de serrage (60) passe à travers le trou traversant (13) et est fixé à la colonne de connexion (52).
